# EUROPEAN PATENT APPLICATION

(11) **EP 3 327 283 A1**
(43) Date of publication of application: **30.05.2018**
(21) Application number: 17180885.0
(22) Date of filing: 12.07.2017
(51) Int. Cl.: F03D 1/06, F03D 80/70

(54) **WIND TURBINE**

(30) Priority: 29.11.2016 DE 102016223676
(71) Applicant: Siemens Aktiengesellschaft, 80333 München (DE)
(72) Inventor: ELMOSE, Soeren Forbech, 7441 Bording (DK)

(57) **Abstract**

Wind turbine comprising a rotor with a hub and several rotor blades arranged at the hub with the rotor blades being rotatable around an axis relative to the hub by means of a pitch bearing arrangement, whereby each rotor blade (3) extends into the hub (2) with a blade section (4), with the pitch bearing arrangement (6) comprising a first and a second rolling bearing (7, 8) being spaced apart from each other in the direction of the axis (5) and arranged between the blade sections (4) and the hub (2).

## Description

The invention relates to a wind turbine comprising a rotor with a hub and several rotor blades arranged at the hub with the rotor blades being rotatable around an axis relative to the hub by means of a pitch bearing arrangement.

Wind turbines are used for generating energy. A generator is driven by a rotor, which rotor comprises a hub and several rotor blades, which are arranged at the hub. For improving the efficiency the orientation or position of the rotor blades relative to the hub can be changed by rotating the rotor blades around an axis by means of an appropriate actor. When rotating a rotor blades their orientation relative to the wind direction can be changed.

For allowing the blade pitching each blade is arranged at the hub by means of a respective bearing arrangement. Such a bearing arrangement usually comprises a rolling bearing. Such rolling bearing is a very expensive component due to the diameter of the blade at its root, with which it is mounted to the hub. When such a rolling bearing needs to be changed due to a bearing failure the complete bearing needs to be replaced, which is a very complex and costly procedure.

Known pitch bearing arrangements use single bearings in form of double row 4-point contact ball bearings. These bearings are axially loaded. Due to the enormous forces resting on the respective pitch bearing arrangement bearing failures in the long run are often to be expected.

The invention addresses the problem to provide a wind turbine with an improved blade pitching.

For solving the problem a wind turbine as introduced above is characterized in that each rotor blade extends into the hub with a blade section, with the pitch bearing arrangement comprising a first and a second rolling bearing being spaced apart from each other in the direction of the axis and arranged between the blade sections and the hub.

According to the invention the rotor blade extends with its root into the hub, so that the hub encompasses the blade respectively its root. This allows for arranging two separate rolling bearings, i.e. a first and a second rolling bearing being spaced apart from each other in the direction of the axis of the rotor blade. These two rolling bearings are arranged between the blade section inserted into the hub and the hub itself. By having the first and the second rolling bearing arranged in a sufficient distance from each other the load on each bearing will be purely radial. The load is taken by both rolling bearing and is therefore better distributed. Especially a tilting moment can be absorbed without causing any overload on the bearings. Furthermore the load on each bearing can be specifically tuned to match the bearing capacity by adjusting the distance between the two bearings. Finally the respective rolling bearings can be of a more simple design, compared to the usually used double row 4-point contact ball bearings, as it is, due to the radial load, possible to use for example plane bearings with rollers or the like.

According to another embodiment of the invention the first rolling bearing arranged on a larger diameter of the hub has a greater diameter than the second rolling bearing arranged on a smaller diameter of the hub. As the first rolling bearing being the outer bearing will carry the larger load it is advantageous to provide this first rolling bearing with a larger diameter, compared to that of the second rolling bearing being arranged closer to the center of the hub. So also by tailoring the respective bearing diameters and the arrangement of the respective bearings on specific inner and outer diameters of the hub it is possible to specifically tune the respective bearing load.

For arranging the two rolling bearings with different diameters it is, according to a first alternative of the invention, possible that each blade section tapers conically from a first bearing seat carrying the first bearing to a second bearing seat carrying the second bearing. So the blade section itself is provided with two bearing seats. It changes the outer diameter to its free end, as it tapers conically from a first bearing seat to a second bearing seat. On the first bearing seat the first rolling bearing is arranged, while on the second bearing seat in the inner of the hub the second rolling bearing is arranged.

A second alternative proposes, that each blade section tapers in a stepped manner from a first bearing seat carrying the first bearing to a second bearing seat carrying the second bearing. This embodiment proposes cylindrical section or regions in the area of the blade root for providing the first bearing seat and the second bearing seat with different outer diameters.

The central feature of the invention is that the blade extends with a blade section into the hub, so that the hub encompasses the blade section or blade root. There are several alternatives for realising this specific match of the rotor blades and the hub.

According to a first alternative the hub may comprise hub sections extending in the direction of the respective axis, with each hub section comprising a bearing seat for the first bearing in the region of its free end and a second bearing seat for the second bearing at an inner position. According to this embodiment both bearing seats of the hub are provided in the respective cylindrical hub section, which extends from a central hub section in the direction of the respective axis. In this hub sections the rotor blades are inserted with their blade roots. The bearing arrangement comprising the first and second rolling bearing is completely arranged in the area in which the respective hub section encompasses the inserted blade root.

According to an inventive alternative the hub may comprise hub sections extending in the direction of the respective axis, with each hub section comprises a bearing seat for the first bearing in the region of its free end and with a second bearing seat for the second bearing being provided at an inner position close to the center of the hub. According to this alternative embodiment the hub also comprises cylindrical hub sections extending from a central hub portion, in which hub section the rotor blade respectively its root is inserted. Different to the embodiment explained above, in this embodiment only the bearing seat for the first bearing is arranged in the region of the free end of the respective hub section. The second bearing seat for the second rolling bearing is arranged at an inner position close to the center of the hub, it is arranged within the inner hub portion. This embodiment allows to mount the first and second bearing on smaller hub diameters compared to the first embodiment.

As explained above, the hub comprises a central hub portion with a respective number of hub sections extending from this central hub portion in the direction of the respective axis. According to a first inventive embodiment the hub may comprise one-piece hub sections, which are integrally formed with the central hub portion. According to a second alternative each hub portion is a separate component attached to a central hub component. According to this embodiment the hub comprises several separate components.

A third alternative for making up the hub proposes that the hub comprises several, especially three similar hub components with a hub section and an inner section with inclined and abutting connection portions, with each hub component comprises a bearing seat for the first bearing in the region of its fee end and a second bearing seat for the second bearing at an inner position. According to this embodiment the hub is built by, for example three similar hub components with each hub component comprising a specific connection section with inclined connection portions. When mounting the hub the hub components are positioned with the inclined connection portions abutting each other. The connection portions are angled. When three hub components are provided, the angle between the respective connection portions is 120°. At these connection portions the hub components are fixed to each other.

Furthermore each hub component comprises a hub section, which, when mounted, extends from the central hub portion in the direction of the axis of rotation of the respective blade. Each hub section is provided with a bearing seat for the first bearing in a region of its free end. The second bearing seat is arranged at an inner portion, which maybe in the area of the hub section, or which maybe closer to the center of the hub.

Finally in this embodiment each hub component may comprise an inner component part with the connection portion and a separate section fixed to the inner component part. So each hub component is made up by two separate parts. It is possible, that each inner component part comprises the second bearing seat for the second rolling bearing, while the separate hub section comprises the first bearing seat for the first rolling bearing. Alternatively it is certainly possible that both bearing seats are provided in the hub section.

According to a second alternative it is possible that each hub component is a one-piece component comprising the hub section and the connection portion, both of which are arranged at the single component.

Further advantages and details of the invention will become apparent with the following description of the drawings, in which:
- Fig. 1: is a schematic drawing of an inventive wind turbine, shown in part, according to a first embodiment,
- Fig. 2: is an enlarged cutout view of a part of the arrangement according to fig. 1,
- Fig. 3: is a schematic drawing of a hub component for making up a wind turbine hub according to a second embodiment,
- Fig. 4: is a schematic drawing of a hub made up by three hub components according to fig. 3, and
- Fig. 5: is a third embodiment of an inventive wind turbine.

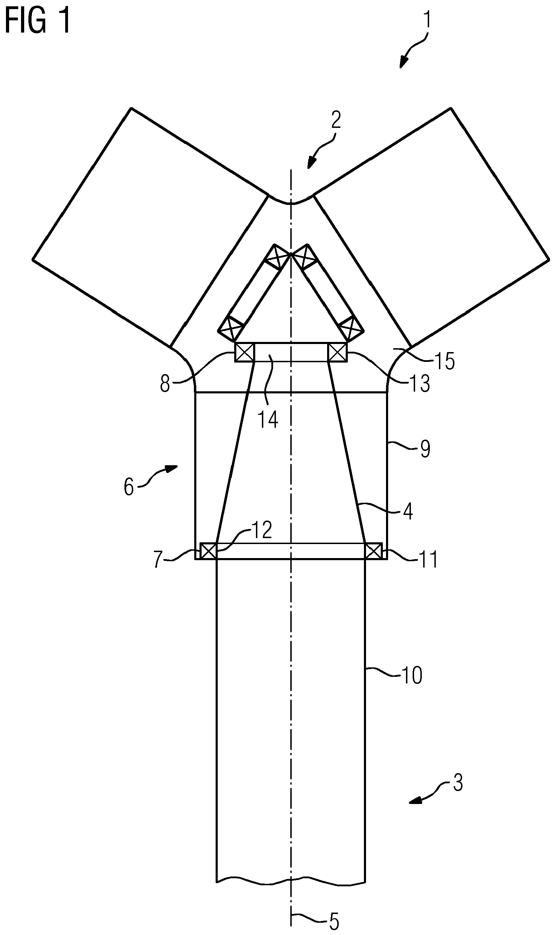

Fig. 1 shows a schematic drawing of an inventive wind turbine 1, from which turbine only the hub 2 and one rotor blade 3 fixed to the hub 2 is shown.

The rotor blade 3 comprises a blade section 4, which tapers conically to its free end. This tapered blade section 4 extends or is inserted into the hub 2. It is rotatable about its longitudinal axis 5 by means of an appropriate actuation means like an electronic drive motor for pitching the blade. For allowing this rotation a pitch bearing arrangement 6 is provided, comprising a first rolling bearing 7 and a second rolling bearing 8. As this is only a schematic drawing all components are only schematically shown.

In this embodiment the hub 2 comprises a central hub component 15, to which respective hub sections 9 extending in the respective direction of the respective rotation axis 5 are fixed. The blade 5 extends with its blade section 4, which is also a separate component fixed to the main blade section 10, into the hub section 9 and, as fig. 1 shows, into the central hub component 15.

The first rolling bearing 7 is arranged at the free end of the hub section 9. The hub section 9 comprises a first bearing seat 11, while the blade section 4 comprises a second bearing seat 12, on which bearing seats 11, 12 the respective first rolling bearing 7 is arranged.

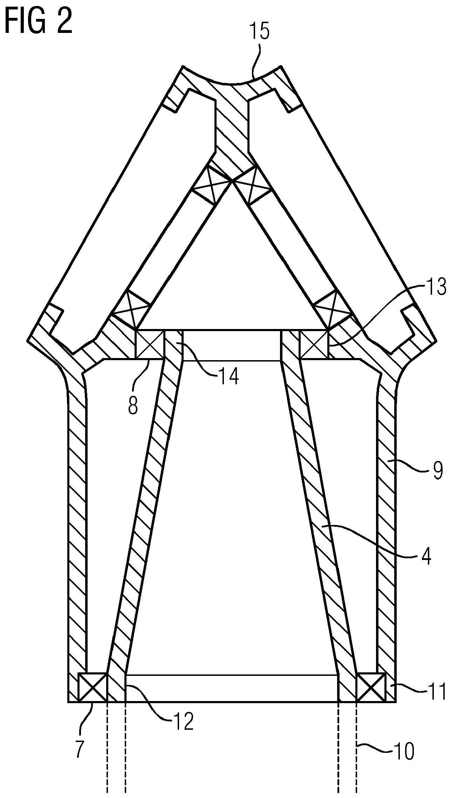

As fig. 2 shows, the blade section 4 extends into the central hub component 15. The second rolling bearing 8 is arranged within this central hub component 15. It is attached to a second bearing seat 13 provided at the hub component 15 and a second bearing seat 14 provided at the blade section 4.

The respective rolling bearings 7 are only radially loaded pitch bearings. The outer first rolling bearing 7 has a larger diameter than the inner second rolling bearing 8, as can clearly be taken from fig. 1. This is due to the fact that the outer rolling bearing 7 will carry the larger load compared to the inner rolling bearing 8.

It is clear that the bearings 7, 8 and the blade sections 4 are inside the hub sections 9, they are shown in the figures in detail only for illustrative purpose.

Fig. 2 shows a schematic cutout view of the central hub component 15, the hub section 9 and the blade section 4. As can be clearly seen the blade section 4, which is attached or fixed in an appropriate manner to the main blade section 10, is encompassed by the hub section 9 and, with its inner end, by the central hub component 15. It is provided with a first outer bearing seat 12 and a second inner bearing seat 14, on which the respective first and second rolling bearings 7, 8 are arranged. As shown in fig. 2, the hub section 9 is provided at its free end with a first bearing seat 11 for carrying the first rolling bearing 7. Finally the central hub component 15 is provided with the second bearing seat 13 for the second rolling bearing 8.

Apart from the blade section 4 tapering in the way shown in fig. 2 it is possible that the blade section 4 may change its diameter in a stepwise manner, with a first cylindrical part providing the first bearing seat 12 and with a second cylindrical part providing the second bearing seat 14 with a smaller diameter.

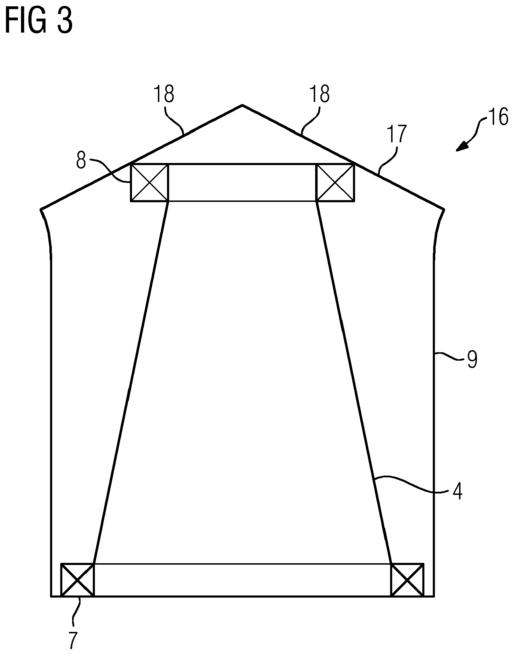

Fig. 3 shows an embodiment of a hub component 16, with identical parts being denoted with identical reference numbers.

The hub component 16 is a one-piece component and comprises a hub section 9 and an inner connection section 17 with two inclined connection portions 18 used for interconnecting three of these hub components 16 for building a hub 2.

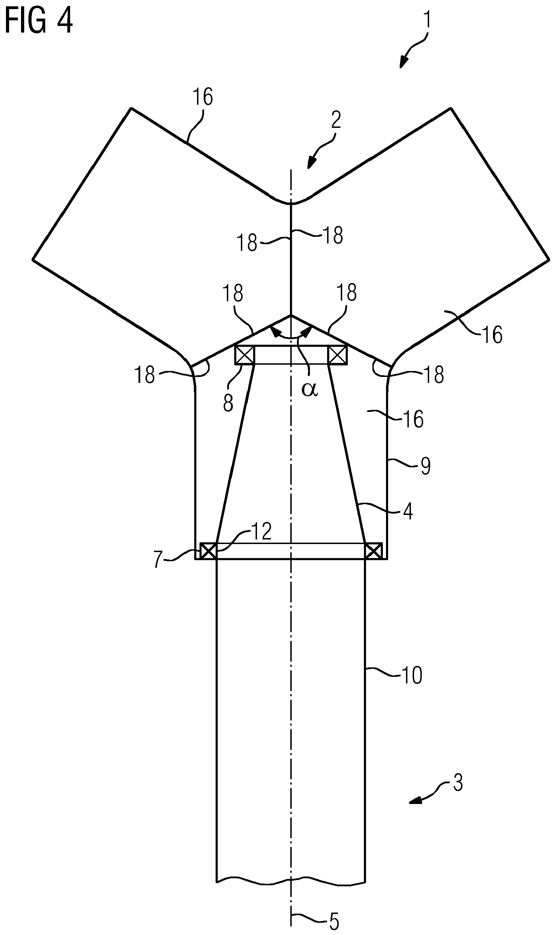

In fig. 3 also the inserted blade section 4 is shown, together with the respective first and second rolling bearings 7, 8, with all components are shown in a schematic way. No need to say that the respective bearings 7, 8 and the blade section 4 are certainly inside of the hub component 16 and are not visible, while the respective bearings 7, 8 are certainly arranged on respective bearing seats etc. Fig. 3 is intended to only show the design or make up of such a hub component 16 used for building a hub, which hub is shown in fig. 4.

Fig. 4 shows an arrangement of three identical hub components 16 building a respective hub 2. The hub components 16 are arranged with their inclined connection portions 18 abutting each other. Each angle α between two respective inclined connection portions 18 is 120°. At these abutting connection portions 18 the respective hub components 16 are fixed to each other.

While only one rotor blade 3 and the respective first and second bearings 7, 8 are shown, there is no need to explain that also the other hub components 16 are provided with these respective elements for building a wind turbine with a rotor comprising three rotor blades.

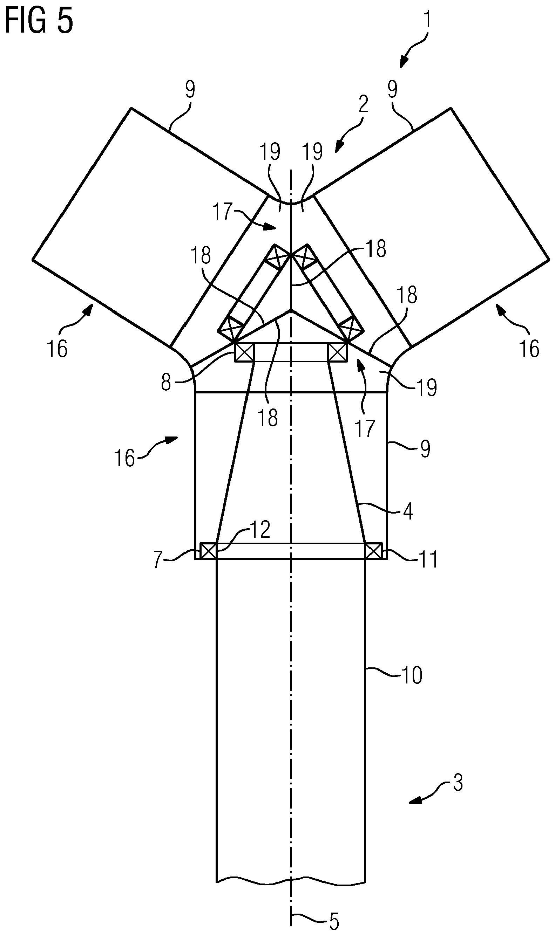

Finally fig. 5 shows another embodiment of an inventive wind turbine 1 with a hub 2, which hub 2 is made up by three separate hub components 16. Each hub component 16 comprises an inner component part 19 with respective inner connection sections 17 with inclined connection portions 18 with an angle between the respective inclined portions 18 of 120°. In the mounted position the connection portions 18 abut each other as is clearly shown in fig. 5, with the hub components 16 being fixed to each other at these connection portions 17.

Attached to these inner component parts 19 are respective cylindrical hub sections 9 extending in the direction of the respective axis of the respective rotor blades 5. Each rotor blade 3 is also in this embodiment provided with a respective blade section 4 which is inserted into the respective hub component 16, i.e. the cylindrical hub section 9 and, as shown in fig. 5, the respective inner component part 19, which certainly is also a hollow body.

For pitching the respective rotor blade 3 also in this embodiment a respective pitch bearing arrangement is provided comprising the first pitch rolling bearing 7 and the second pitch rolling bearing 8. While the first pitch rolling bearing 7 is provided at the free end of the respective hub section 9, the second rolling bearing 8 is provided in the inner hub component 19 at respective bearing seats. The blade section 4 is provided with bearing seats, to which the bearing 7, 8 is attached.

When building the wind turbine it is possible to premanufacture the hub 2 or at least parts of the hub.

With reference to fig. 1 it is possible to attach the hub sections 9 to the central hub component 15 and to insert both the respective rolling bearings 7, 8 and the extending blade section 4. The blade section 4 is not connected to the main blade section 10. This hub can then be mounted by means of a crane at an elevated position. After mounting this premanufactured hub it is only necessary to fix the respective main blade sections 10 to the respective blade sections 4.

A similar process is possible for building the wind turbine shown in fig. 4. It is possible to provide each hub component 16 with the rolling bearings 7, 8 and the hub sections 4. Afterwards the hub components 16 are fixed to each other for building the hub 2. After mounting the hub 2 at an elevated position it is only necessary to attach the respective main blade sections 10 to the blade sections 4 already provided at the hub 2.

When building the wind turbine 1 according to fig. 5 a similar process is possible. The hub components 16 may also be free manufactured by attaching the inner component parts 19 to the hub section 9 and by providing the respective bearings 7, 8. Also the blade sections 4 can also be inserted into the respective hub components 16. When building the hub it is only necessary to attach the respective hub components 16 to each other and to mount it to the turbine at an elevated position. Afterwards only the respective main blade sections 10 need to be fixed to the already inserted blade sections 4.

Although the present invention has been described in detail with reference to the preferred embodiment, the present invention is not limited by the disclosed examples from which the skilled person is able to derive other variations without departing from the scope of the invention.

## Claims

1. Wind turbine comprising a rotor with a hub and several rotor blades arranged at the hub with the rotor blades being rotatable around an axis relative to the hub by means of a pitch bearing arrangement, **characterized in that** each rotor blade (3) extends into the hub (2) with a blade section (4), with the pitch bearing arrangement (6) comprising a first and a second rolling bearing (7, 8) being spaced apart from each other in the direction of the axis (5) and arranged between the blade sections (4) and the hub (2).

2. Wind turbine according to claim 1, **characterized in that** the first rolling bearing (7) being arranged on a larger diameter of the hub (2) has a greater diameter than the second rolling bearing (8) arranged on a smaller diameter of the hub (2).

3. Wind turbine according to claim 2, **characterized in that** each blade section (4) tapers conically from a first bearing seat (12) carrying the first bearing (7) to a second bearing seat (14) carrying the second bearing (8).

4. Wind turbine according to claim 2, **characterized in that** each blade section (4) tapers in a stepped manner from a first bearing seat (12) carrying the first bearing (7) to a second bearing seat (14) carrying the second bearing (8).

5. Wind turbine according to any of the proceeding claims, **characterized in that** the hub (2) comprises hub sections (9) extending in the direction of the respective axis (3), with each hub section (9) comprises a bearing seat (11) for the first bearing (7) in the region of its free end and a second bearing seat (13) for the second bearing (8) at an inner position.

6. Wind turbine according to any of the claims 1 to 4, **characterized in that** the hub (2) comprises hub sections (9) extending in the direction of the respective axis (3), with each hub section (3) comprises a bearing seat (11) for the first bearing (7) in the region of its free end and with a second bearing seat (13) for the second bearing (8) being provided at an inner position close to the center of the hub (2).

7. Wind turbine according to claim 5 or 6, **characterized in that** the hub (2) comprises one-piece hub sections (9), or that each hub section (9) is a separate component attached to a central hub component (15).

8. Wind turbine according to any of the claims 1 to 6, **characterized in that** the hub (2) comprises several, especially three similar hub components (16) with a hub section (9) and an inner connection section (17) with inclined and abutting connection portions (18), with each hub component comprises a bearing seat (11) for the first bearing (8) in the region of its free end and a second bearing seat (13) for the second bearing (8) at an inner position.

9. Wind turbine according to claim 8, **characterized in that** each hub component (16) comprises an inner component part (19) with the connection portion (17) and a separate hub section (9) fixed to the inner component part (19), or that each hub component (16) is a one-piece component.
